# EUROPÄISCHE PATENTSCHRIFT

(11) **EP 1 825 141 B1**
(45) Veröffentlichungstag und Bekanntmachung des Hinweises auf die Patenterteilung: **29.07.2009**
(21) Anmeldenummer: 05813965.0
(22) Anmeldetag: 25.11.2005
(51) Int. Cl.: F03D 11/00, F03D 11/02, F03D 1/00

(54) **WINDENERGIEANLAGE MIT HALTEEINRICHTUNG FÜR EINE ROTORWELLE**
WIND MOTOR WITH A HOLDING DEVICE FOR A ROTOR SHAFT
EOLIENNE COMPRENANT UN DISPOSITIF DE MAINTIEN POUR UN ARBRE DE ROTOR

(30) Priorität: 17.12.2004 DE 102004060770
(43) Veröffentlichungstag der Anmeldung: 29.08.2007
(73) Patentinhaber: NORDEX Energy GmbH, 22848 Norderstedt (DE)
(72) Erfinder: CHRISTENSEN, Michael, DK- 8800 Viborg (DK)
(74) Vertreter: Schildberg, Peter
(86) Internationale Anmeldenummer: PCT/EP2005/012620
(87) Internationale Veröffentlichungsnummer: WO 2006/066686

(56) Entgegenhaltungen:
- EP-A- 1 045 139
- EP-A- 1 359 321
- GB-A- 2 381 047
- US-A- 4 329 117
- US-A1- 2004 041 407

## Beschreibung

Die vorliegende Erfindung betrifft eine Windenergieanlage mit einem Getriebe, dessen Eingang mit einer Rotorwelle gekoppelt ist, wobei für die Rotorwelle ein separates Lager vorgesehen ist.

Erich Hau, Windkraftanlagen, zweite überarbeitete und aktualisierte Auflage, Springer 1996, Seiten 242 - 247, beschreibt unterschiedliche Varianten der Rotorlagerung. So ist für eine lange Welle bekannt, separate Lager vorzusehen. Ferner ist bekannt, eine Rotorlagerung vollständig im Getriebe oder auf einer stehenden, hohlen Achse vorzunehmen. Auch kann das hintere Lager in das Getriebe integriert und das vordere Lager als separates Lager ausgebildet werden. Das separate Lager für die Rotorwelle kann mit einem gesonderten Lagersockel im Maschinenhaus oder in eine lasttragende Maschinenhausvorderwand integriert sein. Die zuletzt genannten Lagerarten werden auch als Dreipunktlagerung bezeichnet, wobei die vordere Lagerung der Rotorwelle das Haupt- oder Rotorlager bildet und die hintere Lagerung durch das Getriebe übernommen wird, das sich seinerseits seitlich (links und rechts) auf einem Maschinenträger abstützt. Mit der Rotorwelle und dadurch mit dem Triebstrang verbunden und von diesem getragen ist der Rotor, bestehend aus der Rotornabe und den Rotorblättern. Bei Arbeiten am Triebstrang, zu denen das Getriebe demontiert werden muss, muss bei bekannten Windenergieanlagen zusammen mit dem Triebstrang auch der Rotor demontiert werden. Das ist mit erheblichem Aufwand verbunden.

EP 1 291 521 A1 schlägt vor, die Rotornabe mit dem Maschinenträger oder der vorderen Wand des Maschinenhauses zu verschrauben, sodass der Rotor an der Windenergieanlage verbleiben kann, während das Getriebe repariert und aus dem Maschinenhaus herausgehoben wird.

Aus Powerful News, A newsletter from NEG Micon A/S, August 2000, Seite 4, rechte Spalte ist eine Halteeinrichtung für die Rotorwelle bekannt, wenn eine Abstützung der Rotorwelle durch das Getriebe fehlt. Die Halteeinrichtung besitzt eine die Rotorwelle überspannende Brücke, die an ihren äußeren Enden mit dem Maschinenträger verbunden ist. Die Brücke ist im montierten Zustand mit dem Maschinenträger verschraubt und besitzt im mittleren Bereich eine Ausnehmung, die die Rotorwelle aufnimmt. Ist das Getriebe demontiert, wird die Rotorwelle durch den Rotor belastet und versucht über das separate Lager nach oben zu kippen. Durch die mit dem Maschinenträger verbundene Haltebrücke wird die Rotorwelle in ihrer Position niedergehalten.

Aus der nachveröffentlichten europäischen Patentanmeldung EP 1 617 075 A1 ist eine Vorrichtung zum Getriebetausch bei einer Windkraftanlage bekannt. Auch bei dieser Vorrichtung wird ein Joch eingesetzt, das eine Bucht zur Anlage der Rotorwelle besitzt. Die Bucht wird über eine Schelle geschlossen, die die Rotorwelle gegen die Bucht festklemmt.

Der Erfindung liegt die Aufgabe zugrunde, mit einfachen Mitteln eine Möglichkeit zu schaffen, um bei einer Windenergieanlage Arbeiten am Getriebe ausführen zu können, ohne dabei den Triebstrang weitgehend demontieren zu müssen.

Die erfindungsgemäße Aufgabe wird durch eine Windenergieanlage mit den Merkmalen gemäß Anspruch 1 gelöst. Vorteilhafte Ausgestaltungen bilden die Gegenstände der Unteransprüche.

Die erfindungsgemäße Windenergieanlage besitzt ein Getriebe, dessen Eingangswelle mit einer Rotorwelle gekoppelt ist. Die Rotorwelle wird durch ein separates Rotorlager gehalten, wobei das hintere Lager in das Getriebe integriert ist. Zwischen dem separaten Lager und dem Getriebe ist eine Halteeinrichtung vorgesehen, die die Rotorwelle in einer vorbestimmten Position hält, wenn eine Abstützung der Rotorwelle durch das Getriebe fehlt. Die erfindungsgemäße Halteeinrichtung übernimmt in diesem Fall die Abstützung der Rotorwelle, sodass das Getriebe von der Rotorwelle abgekoppelt werden kann. Die Halteeinrichtung weist bevorzugt einen Halterahmen auf, der zur lösbaren Verbindung mit einem Maschinenträger vorgesehen ist. In seiner montierten Position überspannt der Halterahmen die Rotorwelle. Ferner weist die Halteeinrichtung bevorzugt zwei Backen auf, die in einer montierten Position die Rotorwelle umgreifen. Die Halteeinrichtung ist ferner mit Spannelementen versehen, die jeweils zwischen eine Backe und den Halterahmen gespannt werden können, um die Backen an dem Halterahmen zu halten. Bevorzugt sind für jede Backe zwei Spannelemente vorgesehen. Die Backen der Halteeinrichtung werden in einer bevorzugten Ausgestaltung um die Rotorwelle gelegt, miteinander verbunden und über die Spannelemente mit dem Halterahmen verbunden. Nachfolgend wird der Halterahmen auf den Maschinenträger in einer die Rotorwelle überspannenden Position montiert.

Bevorzugt stützt der Maschinenträger auch das Getriebe ab, ebenso wie das separate Lager der Rotorwelle.

In einer bevorzugten Weiterbildung der erfindungsgemäßen Halteeinrichtung ist ein Druckring vorgesehen, der - mit der Halteeinrichtung verbunden - eine Kraft in axialer Richtung ausübt, um die Rotorwelle von dem Eingang des Getriebes zu entkoppeln.

Ein bevorzugtes Ausführungsbeispiel der erfindungsgemäßen Halteeinrichtung wird nachfolgend näher beschrieben.

Es zeigt:
- Fig. 1: eine Ansicht des Trägerrahmens von vorne,
- Fig. 2: den Trägerrahmen aus Figur 1 in der Ansicht von vorne mit eingesetzten Haltebacken,
- Fig. 3: Trägerrahmen von oben mit vorgesetztem Druckring,
- Fig. 4: perspektivische Ansicht des Maschinenträgers mit Rotorwelle und Getriebe,
- Fig. 5: vergrößerte Ansicht aus Figur 4 mit anzusetzenden Haltebacken,
- Fig. 6: Ansicht aus Figur 5 mit angesetzten Haltebacken,
- Fig. 7: angesetzte Haltebacken mit Spannelementen,
- Fig. 8: angesetzte Haltebacken mit Spannelementen und aufgesetztem Trägerrahmen,
- Fig. 9: Trägerrahmen und Backen teilweise geschnitten mit vorbereitetem Druckring,
- Fig. 10: Maschinenträger mit aufgesetztem Kranfuß in der perspektivischen Ansicht von schräg oben und
- Fig. 11: Maschinenträger mit aufgesetztem Kranfuß in der Ansicht von der Seite.

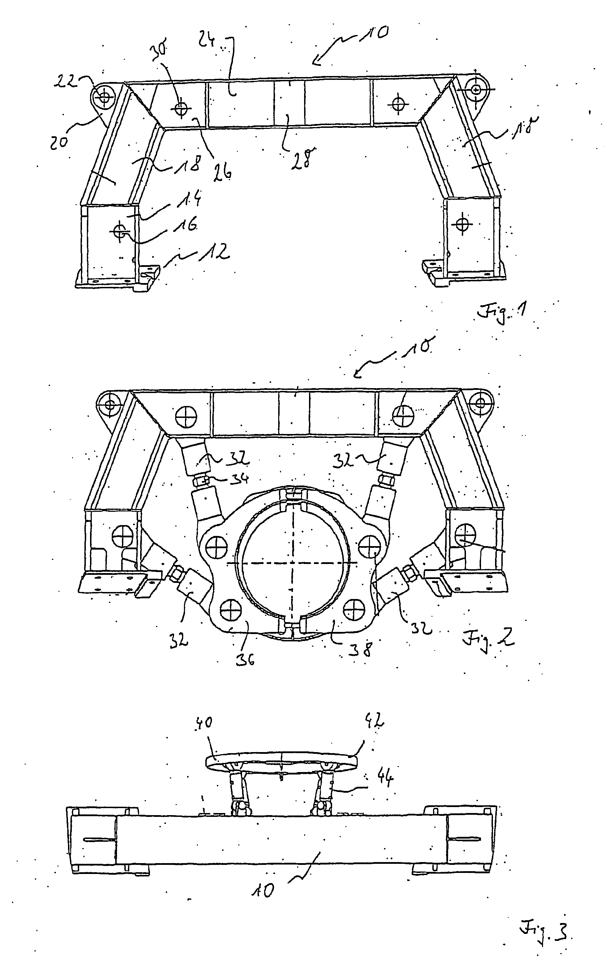

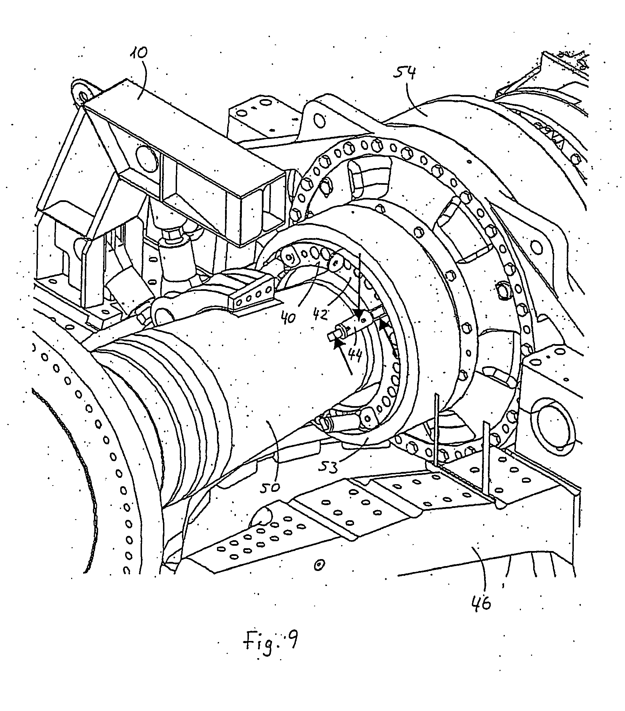

Figur 1 zeigt einen Trägerrahmen 10, der an seinen Enden Montageplatten 12 besitzt. Von den Montageplatten aus erstrecken sich jeweils mehrere Profilabschnitte. Ein erster Profilabschnitt 14 ist als Doppel-T-Profil ausgebildet und besitzt eine Bohrung 16. Anschließend an den ersten Profilabschnitt 14 folgt ein zweiter Profilabschnitt 18, der gegenüber dem ersten Profilabschnitt geneigt ist. Der zweite Profilabschnitt 18 besitzt an seiner nach außen weisenden Seite eine Anschlagöse 20 mit einer zentralen Bohrung 22. An den zweiten Profilträger anschließend, folgt ein mittleres Trägerprofil 24, das an beiden Seiten mit zweiten Trägerprofilen 18 verbunden ist. Das mittlere Trägerprofil 24 besitzt zwei Randabschnitte 26, die durch einen zentralen Mittelbereich 28 getrennt sind. Die seitlichen Bereiche 26 sind mit Bohrungen 30 versehen. Der Mittelträger 24 ist zur Stabilisierung insbesondere in seinem zentralen Bereich 28 verstärkt ausgebildet, in dem zusätzlich das Doppel-T-Profil seitlich mit einer Wand versehen ist (vgl. Fig. 9).

Figur 2 zeigt den Trägerrahmen 10 mit vier angesetzten Spannelementen 32, die in den Bohrungen 16 und 30 gehalten sind. Die Spannelemente 32 wiederum können über ein zentrales Element 34 in ihrer Länge verstellt werden. Wie in Figur 2 zu erkennen, sind die Spannelemente 32 jeweils paarweise mit einem der Backenelemente 36, 38 verbunden. Wie nachfolgend noch erläutert wird, umfassen die Backenelemente 36, 38 die Rotorwelle.

In Figur 3 ist in der Ansicht von oben zu erkennen, dass vor den Trägerrahmen 10 ein Druckring 40, 42 gesetzt werden kann, der über Hubelemente 44 mit den Haltebacken 36 und 38 verbunden ist.

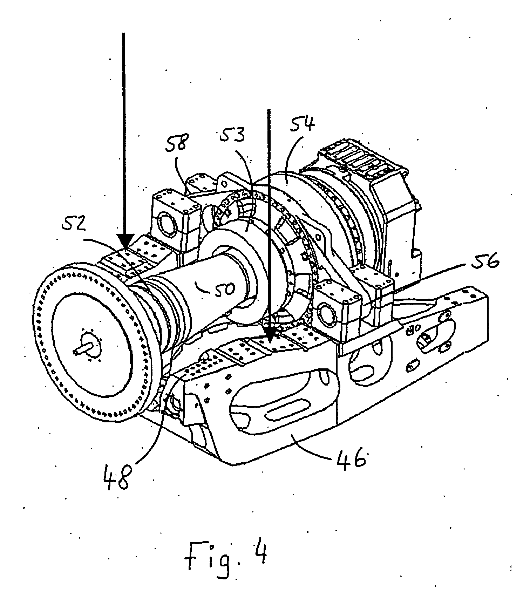

Figuren 4 - 9 veranschaulichen nachfolgend den Vorgang des Einbaus und verdeutlichen die Funktionsweise der Halteeinrichtung. Figur 4 zeigt in einer perspektivischen Ansicht von vorne einen Maschinenträger 46, wie er bei einer Dreipunktlagerung in einer Windenergieanlage verwendet wird. Zur besseren Übersicht wurde das Hauptlager nicht dargestellt. Das Hauptlager stützt sich auf dem Maschinenträger 46 im Bereich 48 ab und lagert die Rotorwelle 50 im Bereich 52. Bei dieser Lagerung wird von einer Dreipunktlagerung gesprochen, da neben dem Hauptlager, das in 52 die Rotorwelle 50 lagert, das Getriebe 54 mit dem integrierten Lager in 56 und 58 abgestützt ist. Bei einem Getriebeschaden oder Wartungsarbeiten des Getriebes war es bisher häufig erforderlich, das Getriebe mitsamt Rotorwelle 50 zu demontieren, da nach Entfernen des Getriebes 54 eine Abstützung für die Rotorwelle 50 fehlte. Die Rotorwelle 50 ist über ein Kegelspannelement (Schrumpfscheibe) 53 mit dem Getriebe 54 verbunden. Die Pfeile deuten auf den Bereich, in dem die Halteeinrichtung mit dem Maschinenträger 46 verbunden wird.

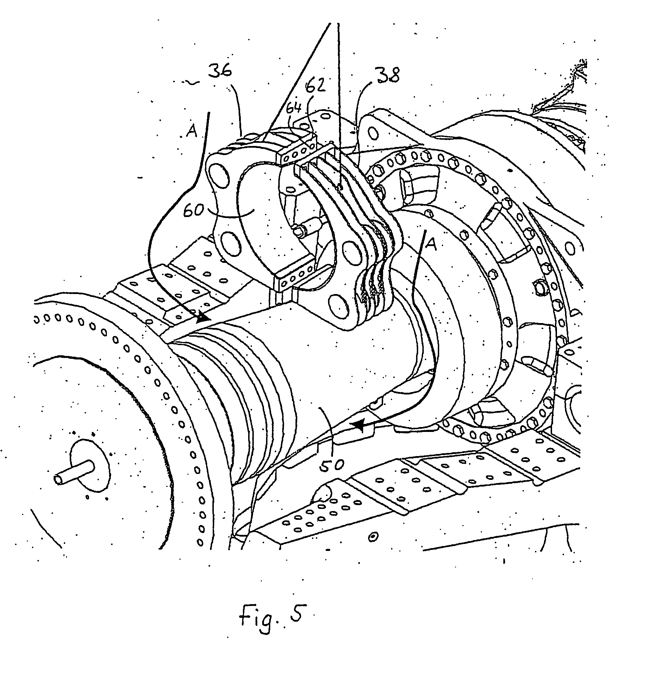

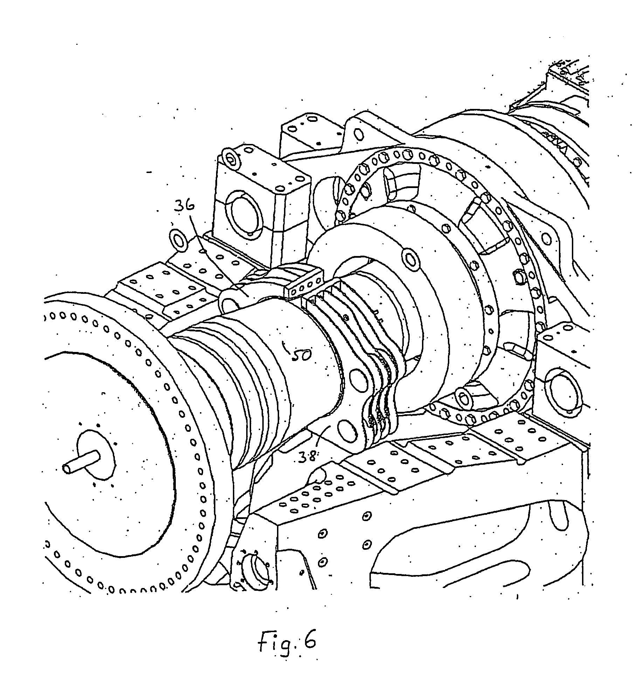

Figur 5 zeigt, wie die Haltebacken 36 und 38 heruntergelassen werden und, wie durch die Pfeile A angedeutet, die Rotorwelle 50 umfaßt wird. Wie in Figur 5 und 6 angedeutet, bestehen die Haltebacken aus parallel zueinander angeordneten Scheiben, die eine an die Geometrie der Rotorwelle 50 angepaßte Haltefläche 60 tragen. Ferner besitzt jede Haltebacke 36 oder 38 an ihren Stirnseiten Anlageflächen 62, die mit Bohrungen 64 versehen sind. Zur Montage der Haltebacken 36 und 38 miteinander, können diese durch Bolzen stirnseitig miteinander verbunden werden.

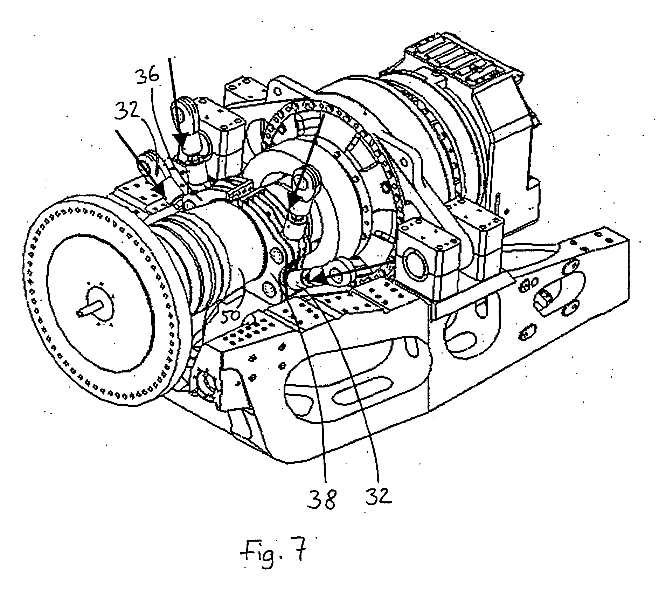

Figur 6 zeigt die aufgesetzten Haltebacken 36 und 38 im nicht verbundenen Zustand. Figur 7 zeigt die Haltebacken 36 und 38 mit angesetzten Spannelementen 32. Im Hinblick auf den Vorgang des Einbaus versteht es sich von selbst, dass die Haltebacken 36 und 38 auch mit bereits vormontierten Spannelementen 32 an die Rotorwelle 50 gesetzt werden können.

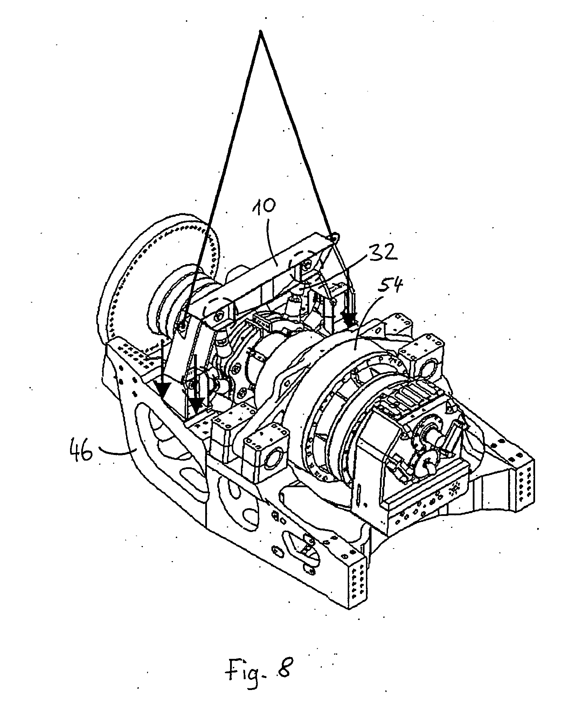

Nachfolgend ist in Figur 8 dargestellt, wie der Trägerrahmen 10 auf den Maschinenträger 46 abgesetzt wird. Der Trägerrahmen 10 wird mit dem Maschinenträger 46 verschraubt und die Spannelemente 32 eingesetzt und angespannt, um die Rotorwelle zu halten. Der Trägerrahmen kann auch aus mehreren Teilen bestehen, die getrennt voneinander in das Maschinenhaus der Windenergieanlage gehoben und erst anschließend zusammenmontiert werden.

Der wie in Figur 8 dargestellte montierte Trägerrahmen mit den Haltebacken 36 und 38 hält die Rotorwelle, wenn das Getriebe 54 von dieser entkoppelt ist.

In Fig. 9 ist die montierte Halteeinrichtung teilweise geschnitten gezeigt, um die Sicht auf das Getriebe 54 mit dem Kegelspannelement 53 und den Druckring 40, 42 mit den Elementen 44 zu ermöglichen. Um das Getriebe 54 von der Rotorwelle 50 trennen zu können, muss das mittels Schrauben gespannte Kegelspannelement (Schrumpfscheibe) 53 gelöst werden. Der Druckring 40, 42 wird angebracht und über Hubelemente 44 mit der Halteeinrichtung verbunden. Die Hubelemente sind vorteilhaft als Hydraulikzylinder ausgebildet, andere Ausbildungen sind jedoch denkbar. Die mit den Haltebacken 36, 38 verbundenen Hubelemente 44 schieben das Getriebe 54 einschließlich Kegelspannelement 53 von der Rotorwelle 50. Die Rotorwelle 50 ist konisch ausgebildet, wodurch beim Herunterschieben des Getriebes 54 einschließlich des Kegelspannelementes 53 das "Gegenhalten" durch die Backen 36, 38 der Halteeinrichtung unterstützt wird.

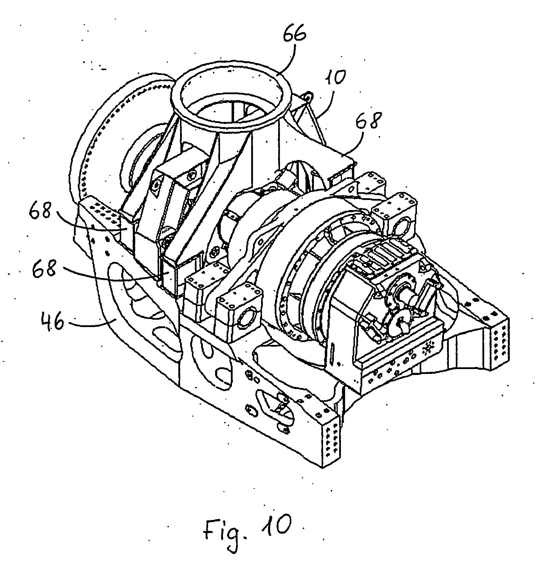

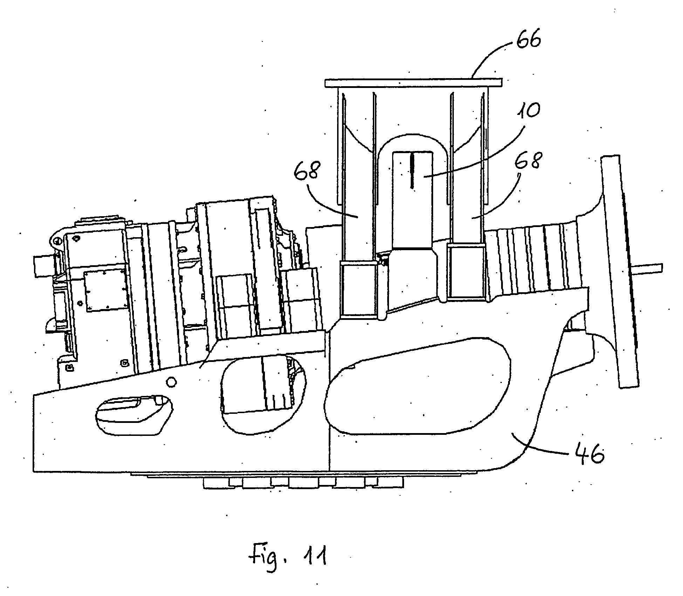

Figuren 10 und 11 zeigen zusätzlich einen Kranfuß 66, der auf dem Maschinenträger 46 befestigt ist. Der Kranfuß 66 besitzt vier Beine 68, die jeweils für sich mit dem Maschinenträger 46 verbunden sind. Der Kranfuß 66 besitzt zwischen jeweils einem Paar von Beinen 68 eine Ausnehmung, die es erlaubt, den Kranfuß 66 bei montiertem Halterahmen 10 aufzusetzen. Hierdurch wird es möglich, mit einem separat auf den Maschinenträger 46 aufgesetzten Kran, bei aufgesetzten Trägerrahmen 10 Lasten zu heben und zu senken.

## Patentansprüche

1. Windenergieanlage mit einem Getriebe (54), dessen Eingang mit einer Rotorwelle (50) gekoppelt ist, die ein separates Lager aufweist, wobei zwischen Lager und Getriebe eine Halteeinrichtung (10) vorgesehen ist, die im montierten Zustand die Rotorwelle in einer vorbestimmten Position hält, wenn eine Abstützung der Rotorwelle durch das Getriebe fehlt, **dadurch gekennzeichnet, daß** die Halteeinrichtung (10) folgendes aufweist:
- Backen (36, 38), die in der montierten Position die Rotorwelle (50) umgreifen,
- einen Halterahmen (10), der in der montierten Position die Rotorwelle überspannt, und
- mindestens ein Spannelement (32) je Backe, das zwischen der Backe und dem Halterahmen gespannt ist.

2. Windenergieanlage nach Anspruch 1, **dadurch gekennzeichnet, dass** die Halteeinrichtung (10) mit einem Maschinenträger (46) lösbar verbindbar ist.

3. Windenergieanlage nach Anspruch 1 oder 2, **dadurch gekennzeichnet, dass** für jede Backe (36,38) zwei Spannelemente (32) vorgesehen sind.

4. Windenergieanlage nach einem der Ansprüche 1 bis 3, **dadurch gekennzeichnet, dass** der Maschinenträger (46) das Getriebe (54) abstützt.

5. Windenergieanlage nach einem der Ansprüche 1 bis 4, **dadurch gekennzeichnet, dass** der Maschinenträger (46) das Lager der Rotorwelle (50) abstützt.

6. Windenergieanlage nach einem der Ansprüche 1 bis 5, **dadurch gekennzeiehnet, dass** zusätzlich ein Druckring (40, 42) vorgesehen ist, der mit der Halteeinrichtung (10) verbunden eine Kraft in axialer Richtung der Rotorwelle ausübt, un die Rotorwelle (50) von dem Eingang des Getriebes (54) zu entkoppeln.

## Claims

1. Wind motor with a drive (54), the input of which is coupled with a rotor shaft (50), which has a separate mount, wherein a holding device (10), which in its mounted state holds the rotor shaft in a predetermined position, is provided between the mount and the drive, if there is no support of the rotor shaft by the drive, **characterized in that** the holding device (10) has the following:
- jaws (36, 38), which in the mounted position encompass the rotor shaft (50),
- a holding frame (10), which in the mounted position spans the rotor shaft, and
- at least one clamping element (32) per jaw, which is clamped between the jaw and the holding frame.

2. Wind motor according to claim 1, **characterized in that** the holding device (10) is connected in a detachable manner with a machine support (46).

3. Wind motor according to claim 1 or 2, **characterized in that** two clamping elements (32) are provided for each jaw (36, 38).

4. Wind motor according to one of claims 1 through 3, **characterized in that** the machine support (46) supports the drive (54).

5. Wind motor according one of claim 1 through 4, **characterized in that** the machine support (46) supports the mount of the rotor shaft (50).

6. Wind motor according to one of claims 1 through 5, **characterized in that** a pressure ring (40, 42) is also provided, which is connected with the holding device (10) and exerts a force in the axial direction of the rotor shaft, in order to couple the rotor shaft (50) from the input of the drive (54).

## Revendications

1. Turbine éolienne avec une transmission (54), dont l'entrée est couplée à un arbre de rotor (50) qui a un palier séparé, un dispositif de maintien (10) étant pourvu entre le palier et la transmission, qui tient l'arbre de rotor dans une position prédéterminée dans la condition montée quand il n'y a pas du support de l'arbre de rotor par la transmission, **caractérisée en ce que** le dispositif de maintien (10) a ce qui suit :
• des mâchoires (36, 38), qui embrassent l'arbre de rotor (50) dans la position montée,
• un châssis de maintien (10), qui recouvre l'arbre de rotor dans la position montée, et
• au moins un élément de tension (32) par mâchoire, qui est serré entre la mâchoire et le châssis de maintien.

2. Turbine éolienne selon la revendication 1, **caractérisée en ce que** le dispositif de maintien (10) est raccordable à un support de machine (46) de façon détachable.

3. Turbine éolienne selon la revendication 1 ou 2, **caractérisée en ce que** deux éléments de serrage (32) sont pourvus pour chaque mâchoire (36, 38).

4. Turbine éolienne selon l'une quelconque des revendications 1 à 3, **caractérisée en ce que** le support de machine (46) supporte la transmission (54).

5. Turbine éolienne selon l'une quelconque des revendications 1 à 4, **caractérisée en ce que** le support de machine (46) supporte le palier de l'arbre de rotor (50).

6. Turbine éolienne selon l'une quelconque des revendications 1 à 5, **caractérisée en ce que** une bague de serrage (40, 42) est pourvue de surcroît, qui exerce une force dans la direction axiale du arbre de rotor en étant relié avec le dispositif de maintien (10), afin de découpler l'arbre de rotor (50) de l'entrée de la transmission (54).
